# EUROPÄISCHE PATENTANMELDUNG

(11) **EP 1 598 252 A1**
(43) Veröffentlichungstag der Anmeldung: **23.11.2005**
(21) Anmeldenummer: 05008757.6
(22) Anmeldetag: 21.04.2005
(51) Int. Cl.: B60T 13/74

(54) **Elektromechanischer Bremskraftverstärker**

(30) Priorität: 17.05.2004 DE 102004024403
(71) Anmelder: Lucas Automotive GmbH, 56070 Koblenz (DE)
(72) Erfinder: Giering, Wilfried, 56743 Mendig (DE)
(74) Vertreter: Thum, Bernhard

(57) **Zusammenfassung**

Bei einem elektromechanischen Bremsdruckerzeuger (10) für eine Kraftfahrzeugbremsanlage mit einem Krafteingangsglied (12), das mit einem Bremspedal gekoppelt ist, einem Gehäuse (14) und einem in dem Gehäuse verlagerbaren Druckkolben (20), wobei der Druckkolben (20) mit dem Gehäuse (14) eine Druckkammer (22) zur Erzeugung eines hydraulischen Bremsdrucks einschließt, und einer Gewindespindel-Gewindemutter-Anordnung (26), deren eine Komponente (28) zur Verlagerung des Druckkolbens (20) vermittels einer Verdrehsicherung (54, 56) relativ zu dem Gehäuse (14) translatorisch geführt ist und deren andere Komponente (30) in dem Gehäuse (14) drehantreibbar ist, wobei der Druckkolben (20) nach Maßgabe einer Verlagerung des Krafteingangsglieds (12) durch Drehantreiben der drehantreibbaren Komponente (30) der Gewindespindel-Gewindemutter-Anordnung (26) zur Erzeugung eines hydraulischen Bremsdrucks in der Druckkammer (22) verlagerbar ist, ist zur Verbesserung der Verdrehsicherung (54, 56) vorgesehen, dass ein Bereich der translatorisch geführten Komponente (28) der Gewindespindel-Gewindemutter-Anordnung (26) mit einem zylindrischen Führungsprofil versehen ist, das mit einem relativ zu dem Gehäuse festgelegten Komplementärprofil (56) zusammenwirkt, wobei die Grundfläche des Führungsprofils derartige Form besitzt, dass sich die translatorisch geführte Komponente (28) der Gewindespindel-Gewindemutter-Anordnung (26) bei über den Umfang des zylindrischen Führungsprofils gleichmäßig verteilter Übertragung von Stützkräften an dem Komplementärprofil (a, b, c) abstützt.

## Beschreibung

Die vorliegende Erfindung betrifft einen elektromechanischen Bremsdruckerzeuger für eine Kraftfahrzeugbremsanlage mit einem Krafteingangsglied, das mit einem Bremspedal gekoppelt ist, einem Gehäuse und einem in dem Gehäuse verlagerbaren Druckkolben, wobei der Druckkolben mit dem Gehäuse eine Druckkammer zur Erzeugung eines hydraulischen Bremsdrucks einschließt, und einer Gewindespindel-Gewindemutter-Anordnung, deren eine Komponente zur Verlagerung des Druckkolbens vermittels einer Verdrehsicherung relativ zu dem Gehäuse translatorisch geführt ist und deren andere Komponente in dem Gehäuse drehantreibbar ist, wobei der Druckkolben nach Maßgabe einer Verlagerung des Krafteingangsglieds durch Drehantreiben der drehantreibbaren Komponente der Gewindespindel-Gewindemutter-Anordnung zur Erzeugung eines hydraulischen Bremsdrucks in der Druckkammer verlagerbar ist.

Ein derartiger elektromechanischer Bremskrafterzeuger ist beispielsweise aus der US 4,918,921 bekannt. Bei diesem Bremskrafterzeuger wird nach Maßgabe einer Betätigung eines Bremspedals ein Elektromotor angesteuert. Der Rotor des Elektromotors ist dabei mit der Gewindemutter eines Kugelgewindetriebs drehfest gekoppelt. Die Gewindespindel des Kugelgewindetriebs ist in der Gewindemutter aufgenommen und in dem Gehäuse verdrehgesichert, jedoch bei einer Drehung der Gewindemutter translatorisch verlagerbar. Dadurch ist es möglich, einen Bremskolben zur Erzeugung eines Bremsdrucks innerhalb des Gehäuses durch eine translatorische Verlagerung der Gewindespindel zu verlagern. Bei der aus dem Stand der Technik bekannten Anordnung ist die Spindel an ihrem von dem Druckkolben abgewandten Ende mit einem einseitig abgeflachten zylindrischen Führungsprofil ausgebildet, das in einer korrespondierenden Führungsöffnung in dem Gehäuse verdrehgesichert geführt ist. Dadurch kann zwar eine translatorische Führung der Spindel erreicht werden. Allerdings kommt es aufgrund der über den Umfang des Führungsprofils ungleichmäßig verteilten Stützkräfte, die bei diesem Stand der Technik lediglich über den abgeflachten Bereich des Führungsprofils von der Gewindespindel auf das Gehäuse übertragen werden, zu einer Beeinträchtigung der Funktion der Anordnung. Dies ist insbesondere auf über den Umfang des Führungsprofils gleichmäßig verteilte Verschleißeffekte und lokal auftretende Verkeilungseffekte zurückzuführen.

Eine ähnliche Anordnung ist aus der US 4,653,815 bekannt. Bei diesem Bremskrafterzeuger wird die Gewindemutter über eine Außenverzahnung vermittels eines Elektromotors rotatorisch angetrieben. Auch bei dieser Anordnung ist die Gewindespindel drehsicher in dem Gehäuse translatorisch geführt, wobei die Verdrehsicherung durch einen Führungsstift realisiert ist, der ein Ende der Gewindespindel durchsetzt und in axialen Nuten in dem Gehäuse aufgenommen ist.

Aus der DE 102 55 198 A1 ist ein elektromechanischer Bremsdruckerzeuger bekannt, bei dem die Spindelmutter verdrehgesichert in dem Gehäuse aufgenommen ist.

Schließlich ist aus der DE 30 31 643 C2 ein elektromechanischer Bremsdruckerzeuger bekannt, bei dem die Abstützung mittels einer Kupplungsanordnung erfolgt.

Es ist demgegenüber eine Aufgabe der vorliegenden Erfindung, einen elektromechanischen Bremsdruckerzeuger der eingangs bezeichneten Art bereitzustellen, bei dem die Verdrehsicherung eine störungsfreie und reibungsarme translatorische Bewegung ermöglicht.

Diese Aufgabe wird durch einen elektromechanischen Bremsdruckerzeuger mit den Merkmalen des Oberbegriffs des Anspruchs 1 gelöst, bei dem zur Ausbildung der Verdrehsicherung ein Bereich der translatorisch geführten Komponente der Gewindespindel-Gewindemutter-Anordnung mit einem zylindrischen Führungsprofil versehen ist, das mit einem relativ zu dem Gehäuse festgelegten Komplementärprofil zusammenwirkt, wobei die Grundfläche des Führungsprofils derartige Form besitzt, dass sich die translatorisch geführte Komponente der Gewindespindel-Gewindemutter-Anordnung bei über den Umfang des zylindrischen Führungsprofils gleichmäßig verteilter Übertragung von Stützkräften an dem Komplementärprofil abstützt.

Durch eine derartige Ausbildung des zylindrischen Führungsprofils und des Komplementärprofils ist gewährleistet, dass keine Punktlasten bei der Übertragung der Stützkräfte auftreten, so dass die translatorisch geführte Komponente der Gewindespindel-Gewindemutter-Anordnung weder einem örtlich begrenzten Verschleiß noch einem Verklemmphänomen unterliegt und somit bei langer Lebensdauer zuverlässig relativ zu dem Gehäuse translatorisch geführt ist.

Wenn im Rahmen der Beschreibung und der Patentansprüche zu der vorliegenden Erfindung von einem "Bremsdruckerzeuger" die Rede ist, so soll dieser Ausdruck sowohl eine Anordnung, bei der über ein Bremspedal und einen daran angeschlossenen Hauptbremszylinder ein Fluiddruck in der Druckkammer erzeugt wird, als auch eine Anordnung umfassen, bei der eine Bremspedalbetätigung erfasst wird und nach deren Maßgabe dann ohne direktes Ausnützen der auf das Bremspedal ausgeübten Pedalbetätigungskraft ein Fluiddruck in der Druckkammer erzeugt wird. Ferner soll der Ausdruck "Bremsdruckerzeuger" auch solche Anordnungen umfassen, die die auf das Bremspedal ausgeübte Pedalbetätigungskraft nur teilweise oder nur in bestimmten (Not-) Betriebssituationen ausnützen.

Die vorstehenden Vorteile lassen sich gemäß einer vorteilhaften Weiterbildung der Erfindung insbesondere auch dadurch erreichen, dass das Führungsprofil eine polygonale Grundfläche aufweist. Bei Ausbildung des Führungsprofils mit einer polygonalen Grundfläche, insbesondere mit einer regelmäßigen polygonalen Grundfläche, lassen sich über die einzelnen Polygonseiten Stützkräfte gleichmäßig über den Umfang verteilt übertragen, ohne dass örtlich auftretende Spitzenwerte zu erhöhtem lokalem Verschleiß oder gar zu einem Verklemmen der translatorischen Führung führen. Gemäß einer Ausführungsvariante ist vorgesehen, dass das Führungsprofil eine im Wesentlichen dreieckige Grundfläche aufweist. Ferner kann vorgesehen sein, dass die Seitenkanten der polygonalen Grundfläche bogenförmig ausgebildet sind. Die Verklemmneigung und unerwünschte Verschleißeffekte können noch besser dadurch überwunden werden, dass die Eckbereiche der polygonalen Grundfläche stetig gerundet sind.

Zur Vereinfachung der Herstellung des erfindungsgemäßen Bremsdruckerzeugers sieht eine Weiterbildung der Erfindung vor, dass das Komplementärprofil von einem Führungsring gebildet ist, der das Führungsprofil zumindest abschnittsweise formschlüssig aufnimmt. So kann der Führungsring beispielsweise aus einem Blechelement hergestellt werden, das später in dem Gehäuse angebracht wird. Nimmt das Komplementärprofil das Führungsprofil nur abschnittsweise formschlüssig auf, so besteht die Möglichkeit, in den Bereichen, in denen keine formschlüssige Anlage gegeben ist, Schmiermittel unterzubringen, das bei Bedarf in die aneinander anliegenden Bereiche durch Kapillarwirkung eingezogen wird.

Eine Weiterbildung der Erfindung sieht vor dass, der Führungsring in dem Gehäuse drehfest aufgenommen ist. Dies kann beispielsweise durch Einkleben, Verschweißen oder durch Einklemmen, insbesondere mittels Bördelverbindungen erfolgen.

Ferner kann erfindungsgemäß vorgesehen sein, dass der Führungsring aus einem reibungsmindernden Material hergestellt oder mit einem reibungsmindernden Material, vorzugsweise mit Polytetrafluorethylen, beschichtet ist. Dadurch lassen sich die Führungseigenschaften unter geringem technischen Aufwand weiter spürbar verbessern und Verschleißeffekte weiter reduzieren.

Bei einer bevorzugten Ausführungsform der Erfindung ist vorgesehen, dass die translatorisch geführte Komponente der Gewindespindel-Gewindemutter-Anordnung von der Gewindespindel gebildet ist und dass die drehantreibbare Komponente der Gewindespindel-Gewindemutter-Anordnung von der Gewindemutter gebildet ist. Eine weitere Reibungsverminderung lässt sich dadurch erreichen, dass die Gewindespindel-Gewindemutter-Anordnung von einem Kugelgewindetrieb gebildet ist.

Die Erfindung betrifft ferner eine Kraftfahrzeugbremsanlage mit einem elektromechanischen Bremsdruckerzeuger der vorstehend beschriebenen Art.

Die Erfindung wird im Folgenden beispielhaft anhand der beiliegenden Figuren erläutert. Es stellen dar:
- Fig.1: eine Längsschnittteilansicht eines erfindungsgemäßen Bremsdruckerzeugers;
- Fig.2: eine perspektivische Darstellung einzelner Komponenten des erfindungsgemäßen Bremsdruckerzeugers;
- Fig.3: eine Darstellung der Komponenten gemäß Fig.2 in Längsschnittansicht; und
- Fig.4: eine Seitenansicht von rechts gemäß dem Pfeil IV aus Fig.3.

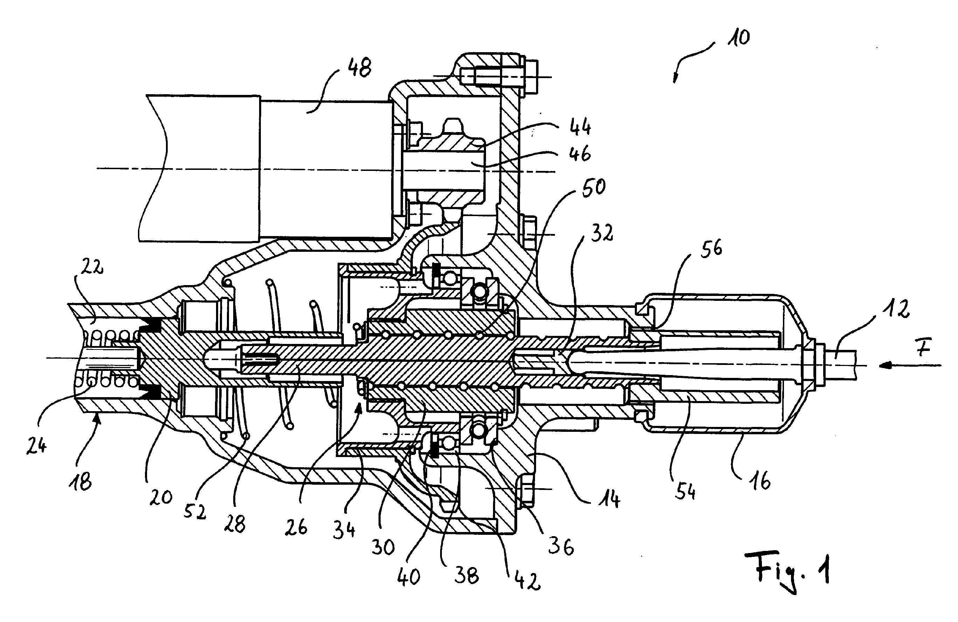

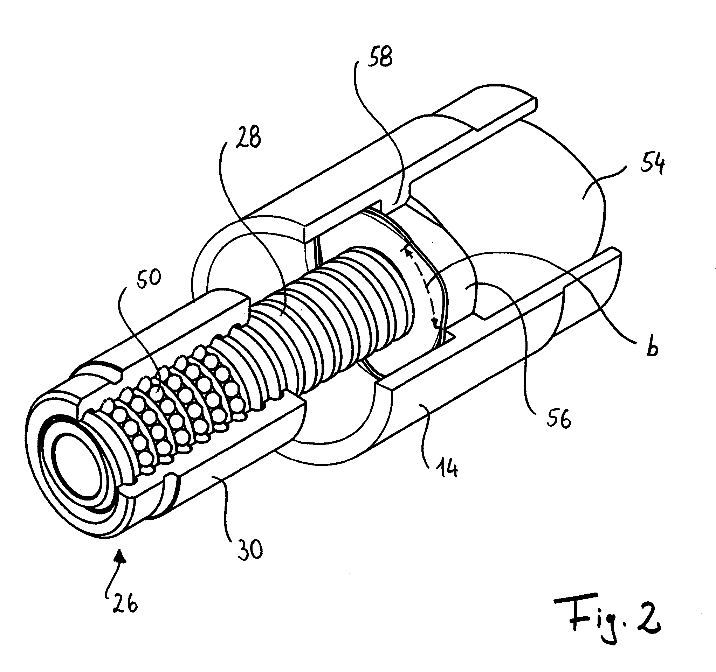

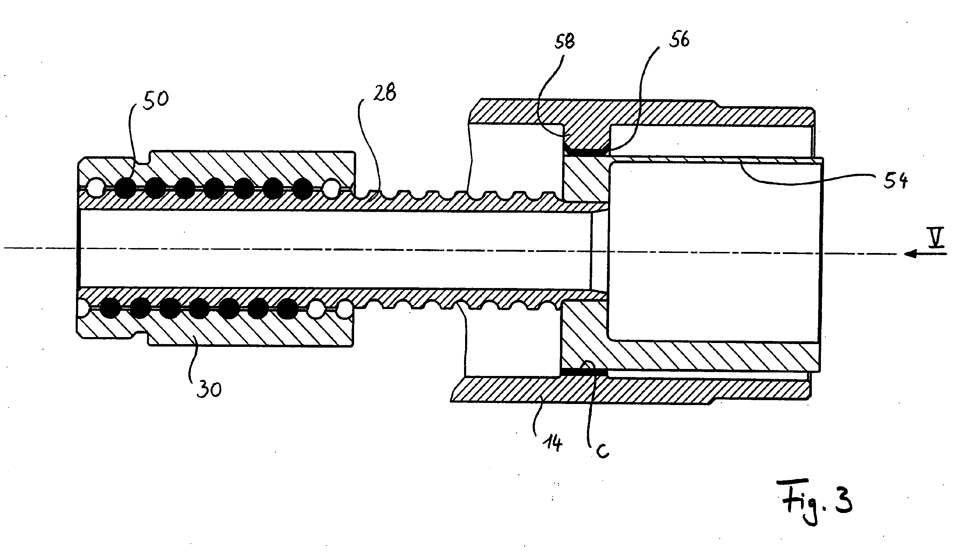

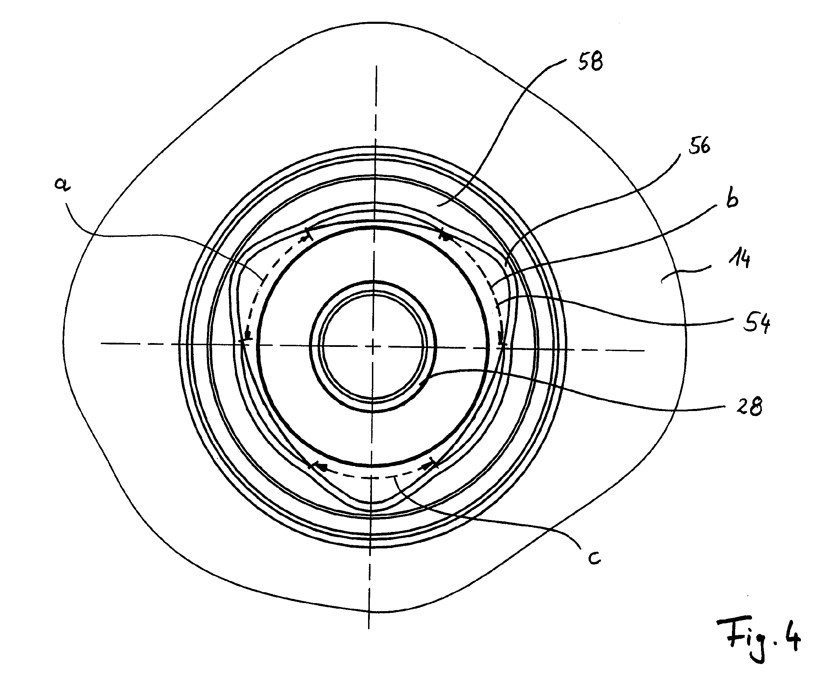

In Fig.1 ist ein erfindungsgemäßer Bremsdruckerzeuger allgemein mit 10 bezeichnet. Dieser umfasst ein Krafteingangsglied 12, das mit einem nicht gezeigten Bremspedal gekoppelt ist. Das Krafteingangsglied 12 ist mit seinem in Fig.1 linken Ende in ein Gehäuse 14 eingeführt. Für eine staubdichte Verbindung zwischen dem Gehäuse 14 und dem Krafteingangsglied 12 sorgt ein Gummibalg 16. An dem von dem Krafteingangsglied 12 entfernten Ende des Gehäuses 14 ist ein Hauptbremszylinder 18 ausgebildet, in dem ein Druckkolben 20 aufgenommen ist. Der Druckkolben 20 schließt mit dem Hauptbremszylinder 18 des Gehäuses 14 eine Druckkammer 22 ein, in der ein hydraulisches Bremsfluid aufgenommen ist. In der Druckkammer 22 ist ferner eine Federanordnung 24 aufgenommen, die den Druckkolben 20 in eine Ausgangsstellung vorspannt.

Zwischen dem Druckkolben 20 und dem Krafteingangsglied 12 ist in dem Gehäuse 14 ein Kugelgewindetrieb 26 aufgenommen. Dieser umfasst eine Gewindespindel 28 und eine Gewindemutter 30. Die Gewindespindel ist an ihrem in Fig.1 rechten Ende mit einer axialen Bohrung ausgebildet, in der sie ein Übertragungselement 32 und das in Fig.1 linke Ende des Krafteingangsglieds 12 aufnimmt. Das Übertragungselement 32 dient zur Kraftübertragung einer auf das Krafteingangsglied 12 einwirkenden Eingangskraft F auf die Gewindespindel 28.

Mit der Gewindemutter 30 ist ein Übertragungskranz 34 drehfest gekoppelt. Dieser Übertragungskranz 34 ist über eine Wälzlageranordnung in dem Gehäuse 14 gelagert. Die Wälzlageranordnung umfasst ein Axiallager 36 und ein Radiallager 38, wobei das Radiallager 38 über einen Sicherungsring 40 in dem Gehäuse 14 gesichert ist. Der Übertragungskranz 34 umfasst an seinem Außenumfang eine Radialverzahnung 42, die mit einem ebenfalls radial verzahnten Antriebszahnrad 44 in kraftübertragend kämmendem Eingriff steht. Das Antriebszahnrad 44 ist auf einer Ausgangswelle 46 eines elektrischen Antriebsmotors 48 drehfest angebracht. Der Antriebsmotor 48 ist fest mit dem Gehäuse 14 verbunden.

Zwischen der Gewindespindel 28 und der Spindelmutter 30 ist in an sich bekannter Weise in einem Käfig eine Vielzahl von Wälzkörpern 50 angeordnet.

Die Gewindespindel 28 ist über eine Rückstellfeder 52 in die in Fig.1 gezeigte Stellung vorgespannt.

Wendet man sich dem in Fig.1 rechten Ende der Gewindespindel 28 zu, so erkennt man, dass diese mit einer Führungshülse 54 gekoppelt ist, wobei die Führungshülse 54 fest auf dem rechten Ende der Gewindespindel 28 sitzt. Die Führungshülse 54 ist in einem Führungsring 56 aufgenommen, der in dem Gehäuse 14 durch lokale Bördelverbindungen gehalten wird. Dies ist im Detail auch in den Figuren 2 bis 4 zu erkennen. Der Führungsring 56 ist aus Metall hergestellt und mit einem reibungsmindernden Kunststoffmaterial, nämlich mit Polytetrafluorethylen, beschichtet.

Fig.2 zeigt in perspektivischer Ansicht den Kugelgewindetrieb 26 mit der Gewindespindel 28 und der Gewindemutter 30 sowie den zwischen diesen reibungsvermindernd angeordneten Wälzkörpern 50. Ferner ist in dieser Figur ein Teil des Gehäuses 14 gezeigt. Dieses umfasst einen integral angeformten Einschnürungsbereich 58, der den Führungsring 56 aufnimmt und an dem der Führungsring 56 durch Bördelverbindungen festgelegt ist. Der Einschnürungsbereich 58 sowie der Führungsring 56 haben, wie in Fig.4 gezeigt, ein geschlossenes Wellenprofil. Der Führungsring 56 nimmt, wie vorstehend bereits gesagt, die Führungshülse 54 in den in Fig.4 mit strichlierten Pfeilen gekennzeichneten Bereichen a, b und c formschlüssig auf und verhindert somit eine Verdrehung der Führungshülse 54 und der mit dieser fest verbundenen Gewindespindel 28 relativ zu dem Gehäuse.

Wie insbesondere Fig.4 zu entnehmen ist, stützt sich somit die im Querschnitt mit einem dreieckigen Profil mit bogenförmigen Seiten und stetig abgerundeten Kanten ausgebildete Führungshülse 54 und damit auch die Gewindespindel 28 an drei Stellen, nämlich den Bereichen a, b und c gleichmäßig über den Umfang verteilt an dem Führungsring 56 ab. Durch dieses in den Bereichen a, b, c formschlüssige, das heißt satte, Abstützen lassen sich die zur Abstützung zu übertragenden Stützkräfte ohne das Risiko von Verklemmungsphänomenen und unerwünschten Punktlasten in das Gehäuse 14 einleiten. Aufgrund der Vermeidung von Verklemmungseffekten und Punktlasten ist somit eine sichere und zuverlässige sowie reibungsarme Linearführung und Verdrehsicherung der Gewindespindel 28 gewährleistet.

Im Betrieb wird eine Bremspedalbetätigung sensorisch, beispielsweise durch einen im Bereich des Krafteingangsglieds angeordneten Kraftsensor, erfasst. Nach Maßgabe der erfassten Bremspedalbetätigung wird der Elektromotor 48 angesteuert, der über das Zahnrad 44 den Übertragungskranz 34 antreibt. Dadurch wird die Gewindemutter 30 drehangetrieben. In der Folge verlagert sich die verdrehgesichert geführte Gewindespindel 28 in Fig. 1 nach links und verlagert entsprechend den Druckkolben 20. Dadurch wird in der Druckkammer 22 ein hydraulischer Bremsdruck aufgebaut.

Wird das Bremspedal vom Fahrer wieder freigegeben, so wird der Motor 48 deaktiviert. In der Folge lässt sich das Antriebszahnrad 44 frei drehen. Dadurch kann unter der Wirkung der Rückstellfeder 52 die gesamte Anordnung in ihre in Fig. 1 gezeigte Stellung zurückkehren, wobei der Bremsdruck in der Druckkammer 22 wieder abgebaut wird.

## Patentansprüche

1. Elektromechanischer Bremsdruckerzeuger (10) für eine Kraftfahrzeugbremsanlage mit
- einem Krafteingangsglied (12), das mit einem Bremspedal gekoppelt ist,
- einem Gehäuse (14) und einem in dem Gehäuse verlagerbaren Druckkolben (20), wobei der Druckkolben (20) mit dem Gehäuse (14) eine Druckkammer (22) zur Erzeugung eines hydraulischen Bremsdrucks einschließt, und
- einer Gewindespindel-Gewindemutter-Anordnung (26), deren eine Komponente (28) zur Verlagerung des Druckkolbens (20) vermittels einer Verdrehsicherung (54, 56) relativ zu dem Gehäuse (14) translatorisch geführt ist und deren andere Komponente (30) in dem Gehäuse (14) drehantreibbar ist,
wobei der Druckkolben (20) nach Maßgabe einer Verlagerung des Krafteingangsglieds (12) durch Drehantreiben der drehantreibbaren Komponente (30) der Gewindespindel-Gewindemutter-Anordnung (26) zur Erzeugung eines hydraulischen Bremsdrucks in der Druckkammer (22) verlagerbar ist,
**dadurch gekennzeichnet, dass** zur Ausbildung der Verdrehsicherung (54, 56) ein Bereich der translatorisch geführten Komponente (28) der Gewindespindel-Gewindemutter-Anordnung (26) mit einem zylindrischen Führungsprofil versehen ist, das mit einem relativ zu dem Gehäuse festgelegten Komplementärprofil (56) zusammenwirkt,
wobei die Grundfläche des Führungsprofils derartige Form besitzt, dass sich die translatorisch geführte Komponente (28) der Gewindespindel-Gewindemutter-Anordnung (26) bei über den Umfang des zylindrischen Führungsprofils gleichmäßig verteilter Übertragung von Stützkräften an dem Komplementärprofil (a, b, c) abstützt.

2. Elektromechanischer Bremsdruckerzeuger (10) nach Anspruch 1,
**dadurch gekennzeichnet, dass** das Führungsprofil eine polygonale Grundfläche aufweist.

3. Elektromechanischer Bremsdruckerzeuger (10) nach Anspruch 2,
**dadurch gekennzeichnet, dass** das Führungsprofil eine im Wesentlichen dreieckige Grundfläche aufweist.

4. Elektromechanischer Bremsdruckerzeuger (10) nach Anspruch 2 oder 3,
**dadurch gekennzeichnet, dass** die Seitenkanten der polygonalen Grundfläche bogenförmig ausgebildet sind.

5. Elektromechanischer Bremsdruckerzeuger (10) nach einem der Ansprüche 2 bis 4,
**dadurch gekennzeichnet, dass** die Eckbereiche der polygonalen Grundfläche stetig gerundet sind.

6. Elektromechanischer Bremsdruckerzeuger (10) nach einem der vorangehenden Ansprüche,
**dadurch gekennzeichnet, dass** das Komplementärprofil von einem Führungsring (56) gebildet ist, der das Führungsprofil zumindest abschnittsweise formschlüssig aufnimmt.

7. Elektromechanischer Bremsdruckerzeuger (10) nach Anspruch 6,
**dadurch gekennzeichnet, dass** der Führungsring (56) in dem Gehäuse drehfest aufgenommen ist.

8. Elektromechanischer Bremsdruckerzeuger (10) nach Anspruch 6 oder 7,
**dadurch gekennzeichnet, dass** der Führungsring (56) aus einem reibungsmindernden Material hergestellt oder mit einem reibungsmindernden Material, vorzugsweise mit Polytetrafluorethylen, beschichtet ist.

9. Elektromechanischer Bremsdruckerzeuger (10) nach einem der vorangehenden Ansprüche,
**dadurch gekennzeichnet, dass** die translatorisch geführte Komponente der Gewindespindel-Gewindemutter-Anordnung (26) von der Gewindespindel (28) gebildet ist und dass die drehantreibbare Komponente der Gewindespindel-Gewindemutter-Anordnung (26) von der Gewindemutter (30) gebildet ist.

10. Elektromechanischer Bremsdruckerzeuger (10) nach einem der vorangehenden Ansprüche,
**dadurch gekennzeichnet, dass** die Gewindespindel-Gewindemutter-Anordnung von einem Kugelgewindetrieb (26) gebildet ist.

11. Kraftfahrzeugbremsanlage mit einem elektromechanischen Bremsdruckerzeuger (10) nach einem der vorangehenden Ansprüche.
